# EUROPÄISCHE PATENTSCHRIFT

(11) **EP 4 031 397 B1**
(45) Veröffentlichungstag und Bekanntmachung des Hinweises auf die Patenterteilung: **05.04.2023**
(21) Anmeldenummer: 21798992.0
(22) Anmeldetag: 21.10.2021
(51) Int. Cl.: B60K 35/00, B60K 37/06

(54) **VERFAHREN ZUR SITUATIONSGESTEUERTEN ANZEIGE EINES BETÄTIGUNGSELEMENTS**
METHOD FOR A SITUATION-CONTROLLED DISPLAY OF AN ACTUATION ELEMENT
PROCÉDÉ POUR UN AFFICHAGE COMMANDÉ PAR LA SITUATION D'UN ÉLÉMENT D'ACTIONNEMENT

(30) Priorität: 19.11.2020 DE 102020007067
(43) Veröffentlichungstag der Anmeldung: 27.07.2022
(73) Patentinhaber: Mercedes-Benz Group AG, 70372 Stuttgart (DE)
(72) Erfinder: GÄNG, Christoph, 70597 Stuttgart (DE); GOLLER, Marko, 72119 Ammerbuch-Entringen (DE); STOCKMANN, Alice, 70197 Stuttgart (DE)
(74) Vertreter: JENSEN & SON
(86) Internationale Anmeldenummer: PCT/EP2021/079274
(87) Internationale Veröffentlichungsnummer: WO 2022/106150

(56) Entgegenhaltungen:
- DE-A1-102015 006 075
- US-A1- 2010 182 137
- US-A1- 2020 254 875

## Beschreibung

Die Erfindung betrifft ein Verfahren zur situationsgesteuerten Anzeige eines Betätigungselements nach der im Oberbegriff von Anspruch 1 näher definierten Art.

In der Praxis ist es heute so, dass die allermeisten Fahrzeuge die Steuerung einer Vielzahl von Parametern ermöglichen. Damit ist eine gezielte Steuerung einzelner Funktionen des Fahrzeugs möglich und zahlreiche Einstellungen lassen sich entsprechend der Vorlieben oder Gewohnheiten einer das Fahrzeug fahrenden Person anpassen. Um diese Vielzahl von Funktionen steuerbar zu machen, ist dabei häufig eine berührungssensitive Oberfläche vorhanden, welche als Touchscreen ausgebildet ist und die einzelnen Funktionen innerhalb einer Vielzahl von verschiedenen Menüs zur Verfügung stellt. Der Nachteil ist dabei, dass die benötigten Funktionen erst gesucht werden müssen bzw. dass häufig für einzelne Funktionen durch mehrere Menüs gescrollt werden muss, um die entsprechende Funktion dann in einem Untermenü aufrufen zu können. Dies ist relativ aufwändig und zeitintensiv. Insbesondere bei einer Auswahl von Funktionen während der Fahrt würde dies eine das Fahrzeug fahrende Person stark und über einen vergleichsweise langen Zeitraum ablenken, was bezüglich der Verkehrssicherheit ein gravierender Nachteil ist.

Die WO 2016/066197 A1 beschreibt daher ein Verfahren zur Unterstützung eines Anwenders bei der Bedienung einer Funktion eines Fahrzeugs, bei welchem je nach Situation verschiedene Betätigungselemente in der Menüstruktur nach oben verlagert oder unmittelbar auf dem Startbildschirm angezeigt werden, sodass das Problem des Scrollens durch Menüs und Untermenüs nicht mehr auftritt und die dadurch ausgelöste potenzielle Beeinträchtigung der Verkehrssicherheit minimiert wird.

Die US 2010/0182137 A1 offenbart ein Fahrzeug mit einer Kamera zur Überwachung vom Kindern. Ein Prozessor verarbeitet die von der Kamera erzeugten Bilddaten, wobei die Anwesenheit eines Kindes durch Umrisse, aus für Kinder typischen Bewegungen oder weiteren Merkmalen bestimmt wird.

Die US 2020/0254875 A1 offenbart eine Funktion zur Fernsteuerung von Fahrzeuganwendungen, die über ein Anzeigeelement wiedergegeben werden können. Das Anzeigeelement kann ein oder mehrere interaktive grafische Elemente beinhalten, die verschiedenen Anwendungen von elektronischen Vorrichtungen des Fahrzeugs zugeordnet sind. Über eine Berührung des grafischen Elements wird die entsprechende Anwendung aktiviert.

Aus der DE 10 2015 006075 A1 ist ein Verfahren zur situationsgesteuerten Anzeige eines Betätigungselements für eine Funktion in einem Fahrzeug auf einer durch eine das Fahrzeug nutzende Person bedienbaren berührungssensitive Anzeigefläche bekannt, wobei das Betätigungselement als Sperrelement für Fensterheber des Fahrzeugs ausgebildet ist und wobei dessen Anzeige immer dann erfolgt, wenn ein Kind auf einem Sitz im Fahrzeug detektiert wird.

Die Aufgabe der hier vorliegenden Erfindung besteht nun darin, ein verbessertes Verfahren zur situationsgesteuerten Anzeige eines Betätigungselements gemäß dem Oberbegriff des Anspruchs 1 anzugeben.

Erfindungsgemäß wird diese Aufgabe durch ein Verfahren mit den Merkmalen im Anspruch 1 gelöst. Vorteilhafte Ausgestaltungen und Weiterbildungen des erfindungsgemäßen Verfahrens ergeben sich aus den hiervon abhängigen Unteransprüchen. Im Anspruch 10 ist außerdem ein Fahrzeug angegeben, welches eine Steuerung umfasst, die zur Durchführung des Verfahrens ausgebildet ist.

Bei dem Verfahren ist es so, dass eine situationsgesteuerte Anzeige eines Betätigungselements für eine Funktion in dem Fahrzeug auf einer bedienbaren berührungssensitiven Anzeigefläche erfolgt. Erfindungsgemäß ist das Betätigungselement dabei als Sperrelement für Fensterheber des Fahrzeugs ausgebildet. Seine Anzeige erfolgt immer dann, wenn ein Kind auf einem Sitz detektiert wird und ein diesem Sitz zugeordneter Fensterheber betätigt wird, wenn eine widerstrebende Betätigung von für verschiedene Personen in dem Fahrzeug zugängliche Fensterheber für dasselbe Fenster erfolgt und/oder wenn die auftretende Betätigung der Fensterheber von der üblichen Art der Betätigung abweicht. Das Sperrelement für Fensterheber, welches auch als Sperrknopf bezeichnet werden kann, wird entsprechend der beschriebenen Situationen in dem Fahrzeug auf der obersten Ebene angezeigt. Dies ermöglicht einerseits die Einsparung eines Sperrknopfes als Hardwareausführung, was Bauraum, Montageaufwand und Kosten spart. Andererseits ist es so, dass durch die spezielle situative Auswertung und Anpassung der Anzeige an diese Situationen der Sperrknopf dennoch schnell und effizient für eine das Fahrzeug nutzende, beispielsweise das Fahrzeug fahrende Person zur Verfügung steht.

Eine Situation kann dabei die Anwesenheit eines Kindes sein, sei es im Fond oder auf dem Beifahrersitz, welches das entsprechende Fenster betätigt, sei es bewusst oder versehentlich. In diesem Fall ist es wichtig, das Fenster entsprechend schnell sperren zu können, um beispielsweise ein Herausfallen von Gegenständen oder gar des Kindes selbst aus dem Fahrzeug zu verhindern. Durch das erfindungsgemäße Verfahren wird in einer solchen Situation unmittelbar der Sperrknopf auf der obersten Ebene der bedienbaren berührungssensitiven Anzeigefläche dargestellt, sodass, vergleichbar wie bei einem teuren und aufwändigen Hardwareschalter, außerordentlich schnell und effizient eingegriffen werden kann.

Eine weitere Situation, in der ein solcher zügiger Eingriff sinnvoll oder zumindest wünschenswert ist, ist eine widerstrebende Betätigung von verschiedenen Fensterhebern für ein und dasselbe Fenster. Wird beispielsweise von einer Person im Fond oder im Beifahrerbereich das dem jeweiligen Sitz zugeordnete Fenster geöffnet und von der das Fahrzeug fahrenden Person das Fenster wieder geschlossen, kann es dazu kommen, dass die andere Person erneut versucht, das Fenster zu öffnen und die das Fahrzeug fahrende Person nochmals versucht, das Fenster zu schließen. Auch in einer solchen Situation muss davon ausgegangen werden, dass die das Fahrzeug fahrende Person das Fenster unbedingt geschlossen halten will, beispielsweise aus Sicherheitsgründen. Auch in einer solchen Situation ist es dann sinnvoll, wenn gemäß des erfindungsgemäßen Verfahrens der Sperrknopf auf der obersten Ebene der Bedienfläche, beispielsweise eines zentralen Touchscreens, eingeblendet wird, um beispielsweise der das Fahrzeug fahrenden Person die Möglichkeit zu bieten, die Situation durch ein Sperren des Fensterhebers zu lösen.

Eine weitere entscheidende Möglichkeit ist es, wenn die auftretenden Betätigungen der Fensterheber von der üblichen Art der Betätigung abweichen. Damit kann beispielsweise ein einmaliges Öffnen und Schließen beispielsweise für ein kurzes Lüften oder dergleichen durchaus sinnvoll sein und fällt unter die üblicherweise auftretende Art der Betätigung. Ein Herumspielen an dem Fensterheber beispielsweise durch ein ständiges Öffnen und Schließen, ein häufiges Anhalten und Wiederstarten der Bewegung des Fensters oder dergleichen kann dann als nicht übliche Betätigung erkannt werden. Darunter könnten ferner auch die zuvor geschilderte Situation sich widersprechender Betätigungen durch verschiedene Personen fallen. Auch in einer solchen Situation kann über den Touchscreen der Sperrknopf entsprechend angeboten werden, um beispielsweise der das Fahrzeug fahrenden Person die Möglichkeit zu geben, hier einzugreifen und bei Bedarf bzw. auf Wunsch den betroffenen Fensterheber zu sperren.

Alternativ zu der das Fahrzeug fahrenden Person kann die Betätigung beispielsweise bei einem in der Mittelkonsole angeordneten Touchdisplay auch durch die auf dem Beifahrersitz befindliche Person erfolgen, wenn beispielsweise die unerwünschte Betätigung von Fensterhebern im Fondbereich erfolgt, also insbesondere von Passagieren oder Kindern, während die beiden Erwachsenen im Frontbereich dann bei Bedarf einfach und effizient über das in der obersten Ebene der Anzeigefläche angeordnete Sperrelement den jeweils betroffenen Fensterheber schnell und einfach sperren können.

Gemäß einer sehr günstigen Weiterbildung des erfindungsgemäßen Verfahrens kann es dabei vorgesehen sein, dass die Detektion der Anwesenheit wenigstens eines Kindes erfolgt, indem dieses kamerabasiert, anhand eines Anmeldeprofils und/oder eines montierten Kindersitzes erkannt wird.

Diese Möglichkeiten sind besonders einfach und effizient, um die Anwesenheit eines Kindes entsprechend zu erkennen und so für den ersten Fall des erfindungsgemäßen Verfahrens festzustellen, dass ein Kind anwesend ist, beispielsweise auf dem Beifahrersitz oder insbesondere im Fond. Wird dann der dem Sitz des Kindes zugeordnete Fensterheber betätigt, wird unmittelbar das Sperrelement für diesen Fensterheber auf dem Touchscreen eingeblendet, um einer Aufsichtsperson für das Kind, beispielsweise der das Fahrzeug fahrenden Person, die Möglichkeit zu geben, hier einzugreifen, falls sie das für notwendig hält. Dies kann dabei einfach und effizient geschehen, ohne dass sie durch verschiedene Menüs und Untermenüs scrollen muss, um die Funktion entsprechend aufzufinden.

Gemäß einer außerordentlich günstigen Weiterbildung des erfindungsgemäßen Verfahrens ist es dabei so, dass die übliche Art der Betätigung anhand von protokollierten Betätigungen der einzelnen Fensterheber in der Vergangenheit vorgegeben oder durch maschinelles Lernen eingelernt wird. Eine solche Protokollierung bildet dann die Basis der "normalen" Betätigung. Gemäß einer außerordentlich günstige Weiterbildung der Idee kann es dabei vorgesehen sein, dass eine Abweichung von der üblichen Art der Betätigung immer dann erkannt wird, wenn eine höhere Anzahl von Betätigungen innerhalb einer vorgegebenen Zeitspanne erfolgt, als dies im Rahmen der üblichen Betätigungen bisher üblich war. Wird ein Fenster also innerhalb von wenigen Sekunden hoch- und runtergefahren oder dieser Vorgang wiederholt sich innerhalb einer vorgegebenen Zeitspanne mehrfach, kann dies anzeigen, dass dies eine nicht übliche Betätigung ist. Andererseits kann das System auch dahingehend verschiedene Betätigungsprofile erkennen und diese mit der Zeit erlernen, wenn beispielsweise genau diese Art der Betätigung, dass das Fenster mehrfach aufgemacht und wieder geschlossen wird, dem Normalfall entspricht. In diesem Fall würde dann keine abweichende Betätigung erkannt und der Sperrknopf entsprechend nicht auf der obersten Ebene eingeblendet.

Eine weitere sehr günstige Ausgestaltung hiervon sieht dabei vor, dass die übliche Art der Betätigung auf einem Backendserver, also einem fahrzeugexternen Server, wie er beispielsweise vom Fahrzeughersteller betrieben wird, abgelegt wird. Der Wert kann dann aus den Daten von vielen einzelnen Nutzern entsprechend bestimmt und verrechnet werden, um somit relativ allgemeingültige Profile für eine Vielzahl von Fahrzeugen zur Verfügung zu stellen, welche dann wiederum in der oben beschriebenen Art und Weise durch spezifische Informationen in den Nutzerprofilen für jeden einzelnen Nutzer weitergebildet werden können. Das System kann so auf der Basis einer allgemeinen/normalen Art der Betätigung lernen, um so entsprechend schnell möglichst zuverlässige Werte zu erkennen. Durch den Rückgriff auf den Backendserver wird eine hohe Rechenleistung und gegebenenfalls auch der Einsatz von KI einfach möglich.

Eine außerordentlich günstige Weiterbildung des erfindungsgemäßen Verfahrens kann ferner vorsehen, dass das Sperrelement nur dann auf der obersten Ebene der bedienbaren Anzeigefläche eingeblendet wird, wenn keine sicherheitsrelevanten Warnungen und/oder Bilder einer Rückfahr- oder Frontkamera oder sonstige nach ASIL (Automotive Safety Integrity Level) relevante Anzeigen angezeigt werden. Solche sicherheitsrelevanten oder für die Nutzung des Fahrzeugs unmittelbar erforderlichen Daten wie beispielsweise Kamerabilder einer Rückfahrkamera oder sicherheitsrelevante Warnungen haben dann in jedem Fall Vorrang gegenüber einer Anzeige des Sperrelements, sodass derartige Warnungen oder Bilder in keinem Fall durch das Sperrelement überdeckt werden und gegebenenfalls nicht erkannt werden oder in einer gegebenenfalls kritischen Situation, beispielsweise beim Einparken, plötzlich nicht mehr zu sehen sind.

Eine weitere sehr günstige Ausgestaltung des erfindungsgemäßen Verfahrens kann ferner vorsehen, dass zumindest im Falle eines detektierten Kindes ergänzend zu dem Sperrelement ein Bedienelement für den die Anzeige auslösenden Fensterheber angezeigt wird. Damit kann die Betätigung des Fensterhebers nicht nur gesperrt und der Zustand quasi eingefroren werden, sondern über die Anzeigefläche kann außerdem genau dieser Fensterheber entsprechend angesteuert und betätigt werden, um beispielsweise ein versehentlich von einem Kind geöffnetes Fenster im Fond nicht nur auf seinem Weg sperren, sondern anschließend auch wieder schnell und komfortabel schließen zu können.

Eine weitere sehr günstige Ausgestaltung hiervon sieht es außerdem vor, dass mit dem ergänzenden Einblenden des Bedienelements diesem Vorrang gegenüber der Steuerung des Fensters durch den Fensterheber eingeräumt wird. Die Steuerung über das eingeblendete Bedienelement hat also eine höhere Priorität und "überstimmt" im Zweifel die Eingabe durch den Fensterheber unmittelbar. Damit wird sichergestellt, dass in einer solchen Situation das Bedienelement auf der Anzeigefläche in jedem Fall Vorrang genießt, sodass beispielsweise ein Fenster im Fond auch gegen die fortwährende Betätigung des Fensterhebers von der den Touchscreen bedienenden Person gesteuert wird.

Eine vorteilhafte Weiterbildung des erfindungsgemäßen Verfahrens kann es außerdem vorsehen, dass ergänzend zu dem Sperrelement, sowie gegebenenfalls zu dem Bedienelement, ein von einer Innenraumkamera erfasstes Bild der Person, die den die Anzeige auslösenden Fensterheber bedient, angezeigt wird. Vorzugsweise kann es sich dabei um eine im Fond sitzende Person handeln. Einer das Fahrzeug bedienenden Person, beispielsweise eine das Fahrzeug fahrenden Person, wird so angezeigt, welche Person den Schalter betätigt, sodass diese die Person beispielsweise namentlich ansprechen kann und gegebenenfalls auch feststellen kann, warum diese den Fensterheber betätigt hat. Geht es dieser Person beispielsweise gesundheitlich nicht gut, so kann er dies in dem Kamerabild, welches ihm angezeigt wird, erkennen und kann beispielsweise auf ein Sperren des Fensterhebers verzichten, sodass diese Person mit Frischluft versorgt wird. Außerdem kann er gegebenenfalls anhalten oder die Person gezielt ansprechen. Hierfür ist kein Umdrehen notwendig, sodass die Ablenkung vom Verkehr bei weitem geringer ist, als dies in einer solchen Situation mit der herkömmlichen Technik der Fall wäre.

Wie bereits erwähnt kann ein Fahrzeug mit einer berührungssensitiven Anzeigefläche und elektrischen Fensterheber im Frontbereich und im Fond des Fahrzeugs sowie einer Steuerung als bevorzugter Einsatzzweck für das Verfahren angegeben werden, wobei die Steuerung dazu eingerichtet ist, das Verfahren gemäß einem oder gemäß mehreren der beschriebenen Varianten entsprechend durchzuführen.

Weitere vorteilhafte Ausgestaltungen des erfindungsgemäßen Verfahrens und des Fahrzeugs ergeben sich auch aus dem Ausführungsbeispiel, welches nachfolgend unter Bezugnahme auf die Figuren näher beschrieben ist.

Dabei zeigen:
- Fig. 1: eine schematische Darstellung eines Innenraums eines Fahrzeugs mit Blick von oben; und
- Fig. 2: eine schematische Darstellung einer möglichen Art der Anzeige auf einer berührungssensitiven Anzeigefläche.

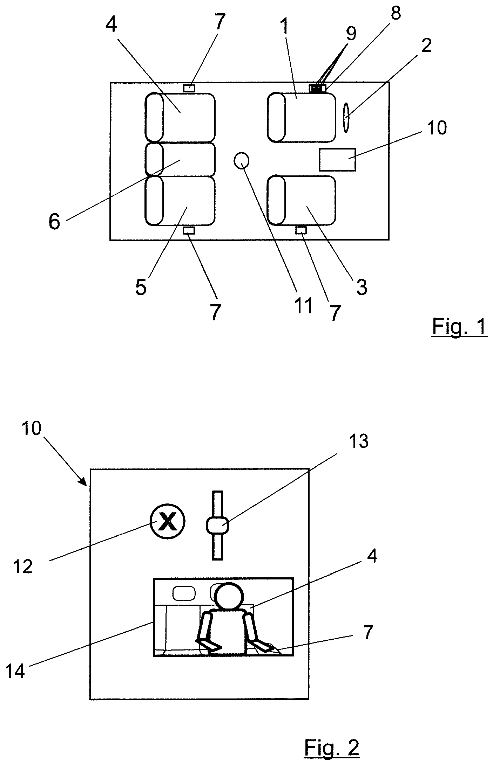

In der Darstellung der Figur 1 ist ein Fahrzeuginnenraum im Blick von oben gezeigt. In Fahrtrichtung F vorne ist im sogenannten Frontbereich des Fahrzeugs ein Sitz 1 gezeigt, welcher einer das Fahrzeug fahrenden Person zugeordnet sein soll. Hierfür ist ein schematisches Lenkrad 2 entsprechend angedeutet. Daneben befindet sich mit dem Bezugszeichen 3 bezeichnet der sogenannte Beifahrersitz. In Fahrtrichtung F hinten im sogenannten Fond des Fahrzeugs ist hinter der das Fahrzeug fahrenden Person ein mit 4 bezeichneter und daneben ein mit 5 bezeichneter Sitz sowie dazwischen ein Notsitz 6 schematisch dargestellt. Jedem der Sitze 3, 4, 5 ist dabei ein eigener Fensterheber 7 zugeordnet, welcher typischerweise in der Art eines Hardwareschalters, prinzipiell aber auch als berührungssensitive Oberfläche oder dergleichen, realisiert sein kann. Neben dem Sitz 1 der das Fahrzeug fahrenden Person befindet sich üblicherweise ein Schaltfeld 8 mit Fensterhebern 9 für jedes einzelne Fenster in dem Fahrzeug.

Ergänzend ist im Inneren des Fahrzeugs außerdem eine berührungssensitive bedienbare Anzeigefläche 10, beispielsweise ein Touchscreen im Bereich der Mittelkonsole, angeordnet. Der Innenraum des Fahrzeugs soll außerdem über eine hier in der Mitte angedeutete und mit 11 bezeichnete Innenraumkamera verfügen.

In der Praxis ist es nun bei Fahrzeugen mit automatischen Fensterheberfunktionen, also den Fensterhebern 7 im Frontbereich und im Fond des Fahrzeugs sinnvoll und als Funktion des Fahrzeugs erforderlich, dass zumindest die das Fahrzeug fahrende auf dem Sitz 1 befindliche Person die Fensterheber 7 der anderen Sitze, und hier insbesondere die Fensterheber 7 im Bereich der Sitze 4 und 5 im Fond des Fahrzeugs, sperren kann. Damit kann erreicht werden, dass mitfahrende Kinder keine Dinge aus dem Fahrzeug werfen können, nicht aus dem Fenster fallen können und die Fensterheber 7 nicht als Spielzeug verwenden können, indem sie die Fenster ständig hoch- und runterfahren. Um nun auf einen Sperrknopf in Hardwareform verzichten zu können, kann ein solches Betätigungselement als Sperrelement 12 für die Fensterheber in eine Software des Fahrzeugs integriert sein. Die das Fahrzeug nutzenden Personen können dann über den Touchscreen 10 diese Funktion bedienen. Typischerweise ist es dabei so, dass nicht alle Funktionen in der obersten Ebene der Software untergebracht werden können, sodass die Personen zum Ein- und Ausschalten bestimmter Funktionen des Fahrzeugs häufig in Untermenüs scrollen müssen, was entsprechend aufwändig ist, und was in einer Situation, in der beispielsweise ein Kind droht, aus dem Fenster zu fallen, in jedem Fall nicht zielführend ist. Aus diesem Grund wird ein Sperrelement 12 auf dem Touchscreen 10 situationsgesteuert immer dann angezeigt, wenn die Verfügbarkeit eines derartigen Sperrelements notwendig erscheint.

In der Darstellung der Figur 2 ist ein vergrößerter Ausschnitt des Touchscreens 10 nochmals gezeigt. Auf diesem ist ein mit 12 bezeichnetes Sperrelement für die Fensterheber 7 eingeblendet. Die Anzeige in der oberen Ebene erfolgt dabei immer dann, wenn eines der nachfolgenden Szenarien eintritt, wodurch eine Situation gegeben ist, in welcher der Sperrknopf 12 zum schnellen Eingreifen beispielsweise durch die auf dem Sitz 1 befindliche Person notwendig erscheint.

Die erste Situation könnte es dabei sein, dass ein Kind beispielsweise im Fond auf den Sitzen 4 oder 5 sitzt und den diesen Sitzen 4, 5 zugeordneten Fensterheber 7 entsprechend betätigt. Auf dem Touchscreen 10 wird dann das Sperrelement 12 angezeigt, sodass beispielsweise die auf dem Sitz 1 oder auch auf dem Sitz 3 sitzende Person die Betätigung des Fensterhebers 7 und damit das Öffnen oder Schließen des Fensters direkt und unmittelbar unterbrechen kann. Ein Kind kann dabei beispielsweise durch die Innenraumkamera 11 erkannt werden oder auch durch ein entsprechendes Anmeldeprofil, die Belegung eines Sitzes oder das Erkennen eines Kindersitzes beispielsweise auf einem der Sitze 4 und/oder 5 im Fond des Fahrzeugs.

Zusätzlich zum reinen Sperren des diesem Sitz 4 oder 5 zugeordneten Fensterhebers 7 über das Sperrelement 12 kann es dann auch sinnvoll sein, eine Betätigung für das Fenster auf den Touchscreen 10 entsprechend anzubieten, wofür ein hier mit 13 bezeichnetes Bedienelement beispielsweise in Form eines virtuellen Schiebeschalters eingeblendet wird, sodass die eingreifende Person nicht nur die Funktion des Fensterhebers 7 sperren sondern das Fenster auch öffnen und schließen kann. Die auf dem Sitz 1 befindliche Person könnte dies prinzipiell auch über das Bedienfeld 8 und den dort für das jeweilige Fenster angeordneten Fensterheber. Dafür müsste sie jedoch feststellen, welches der Fenster geöffnet worden ist, sodass das Bedienelement 13, insbesondere in Kombination mit dem Sperrelement 12, die einfachere und effizientere Art des Eingreifens ermöglicht. Dabei ist es selbstverständlich so, dass eine Betätigung des Bedienelements 13 Vorrang gegenüber der Betätigung des jeweiligen Fensterhebers 7 hat, sodass hier aktiv Eingegriffen und eine eventuelle Betätigung durch den Fensterheber 7 überstimmt werden kann.

Ergänzend kann auf dem Touchscreen 10 außerdem in dem mit 14 bezeichneten Bereich in der Darstellung der Figur 2 ein Bild der Innenraumkamera 11 eingeblendet werden, welches den Sitz bzw. die darauf befindliche Person 15 zeigt, welche den diesem Sitz 4, 5 zugeordneten Fensterherber 7 entsprechend betätigt. Dies ermöglicht es beispielsweise der das Fahrzeug fahrenden Person die entsprechende Person 15, beispielsweise ein Kind, namentlich anzusprechen, ohne dass sie sich umdrehen muss, um bei zum Beispiel zwei Kindern zu sehen, wer das Fenster geöffnet hat.

Ein weiteres Szenario, welches zur Einblendung des Sperrelements 11 in der obersten Ebene des Touchscreens 10 führt, kann das Erkennen widerstrebender Wünsche sein, Dies bedeutet, dass die Fensterheber 7 und der demselben Fenster zugeordnete Fensterheber 9 abwechselnd betätigt werden, um das Fenster herauf- und herunterzufahren. Ein solches Konfliktpotenzial kann dabei erkannt werden, indem eine zyklische Protokollierung aller durch die Fensterheber 7, 9 ausgelösten Betätigungen durchgeführt wird. Dabei wird protokolliert, wenn die auf dem Sitz 1 befindliche Person die Fenster hoch- oder herunterfährt und ob einer der Fahrgäste auf den Sitzen 3, 4 oder 5 mit dem diesen Sitzen und Fenstern zugeordneten Fensterhebern 7 die Fenster ebenfalls hoch- oder herunterfährt. Ist dies der Fall, wobei insbesondere eine zeitliche Grenze vorgegeben werden kann, innerhalb derer dies erfolgt, werden widerstrebende Wünsche der einzelnen Personen erkannt und die Einblendung zumindest des Sperrelements 12, insbesondere jedoch auch des Bedienelements 13 und der Bilddaten im Bereich 14 des Touchscreens 10, kann erfolgen.

Als weiteres kann außerdem eine übliche Art der Betätigung als eine Baseline festgelegt und/oder aus real erfassten protokollierten Daten ermittelt werden. Wird nun von dieser Baseline abgewichen, beispielsweise indem es häufiger als üblich zu einem erneuten schnellen Hoch- bzw. Runterfahren des Fensters kommt, oder dass verschiedene Wünsche der Personen über die Fensterheber 7 und 9 eingegeben werden, was zu einer gegenläufigen Bedienung führt, dann kann das Sperrelement 12 auf dem Touchscreen 10 ebenfalls angeboten werden. Solche Daten wie auch vordefinierte Zeitglieder für das Event der Betätigung des Fensters können dabei auch in einem fahrzeugexternen Server wie beispielsweise einem Vehicle Backend hinterlegt werden. Wird innerhalb von einer vorgegebenen Zeitspanne eine Gegensteuerung beispielsweise für die Fensterheber 7 im Fond durch einen der Fensterheber 9 im Frontbereich erkannt, können entsprechende Maßnahmen ergriffen und das Sperrelement 12 kann in der obersten Ebene des Touchscreens 10 eingeblendet werden.

Das Sperrelement 12 auf dem Touchscreen 10 bietet so in den beschriebenen besonders relevanten Situationen zum Sperren von Fensterhebern also eine direkte Interaktionsmöglichkeit ohne Tiefe, sodass die Person, welche beispielsweise die Fensterheber 7 im Fond oder am Beifahrersitz 3 aus den genannten Gründen sperren will, direkt und ohne in tiefere Menüs der Software einsteigen zu müssen, diese Funktionalität auslösen kann.

Durch den Einsatz des Vehicle Backends können dabei die Daten verschiedener Nutzer zusammengeführt und zu einer mittleren "normal" Baseline kombiniert werden. Darüber hinaus kann nun entsprechend eines Nutzerprofils eine eigenständige Weiterbildung dieses allgemeingültigen Profils vorgenommen werden, beispielsweise indem nutzerspezifische Betätigungen der Fensterheber im Laufe der Zeit durch maschinelles Lernen erkannt und abgelegt werden, sodass im Laufe der Zeit die Nutzerprofile sich immer besser dem tatsächlichen Verhalten des Nutzers anpassen. Die im Vergleich zum Fahrzeug höhere Rechenleistung des Backends ermöglicht hier beispielsweise auch den Einsatz von künstlicher Intelligenz (KI) zur Auswertung der Daten.

Das Sperrelement 12 kann also in solchen Situationen vorzugsweise eingeblendet werden. Auf ein Einblenden kann dabei verzichtet werden, wenn andere wichtige Merkmale in dem Touchscreen eingeblendet werden müssen wie beispielsweise die Bilder einer Parkkamera, wichtige Warnmeldungen oder dergleichen. Diese werden dann nicht überblendet, sodass diese Informationen nicht verloren gehen können.

## Patentansprüche

1. Verfahren zur situationsgesteuerten Anzeige eines Betätigungselements für eine Funktion in einem Fahrzeug auf einer durch eine das Fahrzeug nutzende Person bedienbaren berührungssensitive Anzeigefläche (10),
**dadurch gekennzeichnet, dass**
das Betätigungselement als Sperrelement (12) für Fensterheber (7) des Fahrzeugs ausgebildet ist, wobei dessen Anzeige immer dann erfolgt, wenn ein Kind auf einem Sitz (3,4,5) im Fahrzeug detektiert wird und ein diesem Sitz (3,4,5) zugeordneter Fensterheber (7) betätigt wird,
wenn eine widerstrebende Betätigung von für verschiedene Personen in dem Fahrzeug zugänglichen Fensterhebern (7,9) für dasselbe Fenster erfolgt und/oder wenn die auftretende Betätigung der Fensterheber (7,9) von der üblichen Art der Betätigung abweicht.

2. Verfahren nach Anspruch 1.
**dadurch gekennzeichnet, dass**
die Detektion der Anwesenheit wenigstens eines Kindes erfolgt, indem dieses kamerabasiert, anhand eines Anmeldeprofils und/oder eines montierten Kindersitzes erkannt wird.

3. Verfahren nach Anspruch 1 oder 2,
**dadurch gekennzeichnet, dass**
die übliche Art der Betätigung anhand von protokollierten Betätigungen der einzelnen Fensterheber (7, 9) in der Vergangenheit vorgegeben oder eingelernt wird.

4. Verfahren nach einem der Ansprüche 1 bis 3,
**dadurch gekennzeichnet, dass**
eine Abweichung von der üblichen Art der Betätigung immer dann erkannt wird, wenn eine höhere Anzahl von Betätigungen innerhalb einer vorgegebenen Zeitspanne erfolgt, als dies im Rahmen der üblichen Betätigungen erfolgt.

5. Verfahren nach einem der Ansprüche 1 bis 4,
**dadurch gekennzeichnet, dass**
die üblichen Art der Betätigung auf einem fahrzeugexternen Server abgelegt wird.

6. Verfahren nach einem der Ansprüche 1 bis 5,
**dadurch gekennzeichnet, dass**
das Sperrelement (12) nur dann auf der obersten Ebene der bedienbaren Anzeigefläche (10) eingeblendet wird, wenn keine sicherheitsrelevanten Warnungen, Bilder einer Rückfahr- oder Frontkamera angezeigt werden.

7. Verfahren nach einem der Ansprüche 1 bis 6,
**dadurch gekennzeichnet, dass**
zumindest im Falle eines detektierten Kindes ergänzend zu dem Sperrelement (12) ein Bedienelement (13) für den die Anzeige auslösenden Fensterheber (7) angezeigt wird.

8. Verfahren nach Anspruch 7,
**dadurch gekennzeichnet, dass**
mit dem ergänzenden Einblenden des Bedienelements (13) diesem Vorrang gegenüber der Steuerung des Fensters durch die Fensterheber (7), zumindest die Fensterheber (7) im Fond, eingeräumt wird.

9. Verfahren nach einem der Ansprüche 1 bis 8,
**dadurch gekennzeichnet, dass**
ergänzend zu dem Sperrelement (12) ein von einer Innenraumkamera (11) erfasstes Bild der, vorzugsweise im Fond befindlichen, Person (15), welche den die Anzeige auslösenden Fensterheber (7) bedient, angezeigt wird.

10. Fahrzeug mit einer berührungssensitiven Anzeigefläche (10) und elektrischen Fensterhebern (7, 9) im Frontbereich und im Fond des Fahrzeugs, sowie mit einer Steuerung, welche dazu eingerichtet ist, das Verfahren nach einem der Ansprüche 1 bis 9 durchzuführen.

## Claims

1. Method for the situation-controlled display of an actuating element for a function in a vehicle on a touch-sensitive display area (10) which can be operated by a person using the vehicle,
**characterised in that**
the actuating element is designed as a locking element (12) for window lifters (7) of the vehicle, wherein it is always displayed
if a child is detected on a seat (3, 4, 5) in the vehicle and a window lifter (7) assigned to said seat (3, 4, 5) is actuated,
if there is a conflicting actuation of window lifters (7, 9) for one and the same window accessible to different persons in the vehicle, and/ or
if the current actuation of the window lifters (7, 9) deviates from the usual manner of actuation.

2. Method according to claim 1,
**characterised in that**
the presence of at least one child is detected by recognition based on a camera, by means of a logon profile and/or an installed child seat.

3. Method according to claim 1 or 2,
**characterised in that**
the usual manner of actuation is predetermined or learned by means of logged actuations of the individual window lifters (7, 9) in the past.

4. Method according to any of claims 1 to 3,
**characterised in that**
a deviation from the usual manner of actuation is always detected if there is a higher number of actuations within a predetermined period of time than in the context of the usual actuations.

5. Method according to any of claims 1 to 4,
**characterised in that**
the usual manner of actuation is stored on a vehicle-external server.

6. Method according to any of claims 1 to 5,
**characterised in that**
the locking element (12) is only shown on the top-most plane of the controllable display area (10) if no safety-relevant warnings, images of a reversing or front camera are displayed.

7. Method according to any of claims 1 to 6,
**characterised in that**
at least in the case of a detected child, a control element (13) for the window lifter (7) triggering the display is displayed in addition to the locking element (12).

8. Method according to claim 7,
**characterised in that**
the additional showing of the control element (13) is given priority over the control of the window by the window lifters (7), at least the window lifters (7) in the rear.

9. Method according to any of claims 1 to 8,
**characterised in that**
in addition to the locking element (12), an image of the person (15) - preferably in the rear - operating the window lifter (7) triggering the display as detected by an interior camera (11) is displayed.

10. Vehicle with a touch-sensitive display area (10) and electric window lifters (7, 9) in the front and in the rear of the vehicle, and with a control arranged to carry out the method according to any of claims 1 to 9.

## Revendications

1. Procédé d'affichage commandé en fonction d'une situation, d'un élément d'actionnement pour une fonction dans un véhicule sur une surface d'affichage (10) tactile pouvant être utilisée par une personne qui se sert du véhicule à moteur, **caractérisé en ce que**
l'élément d'actionnement est conçu sous la forme d'un élément de blocage (12) pour des lève-vitre (7) du véhicule, dont l'affiche se produit toujours lorsqu'un enfant est détecté être assis dans le siège (3, 4, 5) dans le véhicule à moteur et qu'un lève-vitre (7) associé à ce siège (3, 4, 5) est actionné,
lorsqu'un actionnement contradictoire de lève-vitre (7, 9) accessibles à plusieurs personnes dans le véhicule à moteur pour la même fenêtre est effectué pour la même fenêtre et/ou lorsque l'actionnement du lève-vitre (7, 9) se produisant, s'écarte de la manière habituelle de l'actionnement.

2. Procédé selon la revendication 1, **caractérisé en ce que** la détection de la présence d'au moins un enfant s'effectue en reconnaissant ce dernier par une caméra, au moyen d'un profil utilisateur et/ou d'un siège enfant installé.

3. Procédé selon la revendication 1 ou 2, **caractérisé en ce que** la manière habituelle de l'actionnement a été prédéfinie ou apprise dans le passé au moyen d'actionnements enregistrés de chacun des lève-vitre (7, 9).

4. Procédé selon l'une quelconque des revendications 1 à 3, **caractérisé en ce qu'**un écart de la manière habituelle de l'actionnement peut être toujours reconnue, lorsqu'un plus grand nombre d'actionnements se produit dans un laps de temps prédéfini, que le nombre dans le cadre d'actionnements habituels.

5. Procédé selon l'une quelconque des revendications 1 à 4, **caractérisé en ce que** la manière habituelle de l'actionnement est enregistrée sur un serveur externe au véhicule à moteur.

6. Procédé selon l'une quelconque des revendications 1 à 5, **caractérisé en ce que** l'élément de blocage (12) apparaît uniquement au niveau le plus élevé de la surface d'affichage commandable (10) lorsqu'aucun avertissement, aucune image concernant la sécurité, d'une caméra avant ou arrière ne sont affichés.

7. Procédé selon l'une quelconque des revendications 1 à 6, **caractérisé en ce qu'**au moins en cas d'un enfant détecté, en complément de l'élément de blocage (12) s'affiche un élément de commande (13) pour le lève-vitre (7) déclenchant l'affichage.

8. Procédé selon la revendication 7, **caractérisé en ce qu'**au moyen de l'enregistrement venant en complément de l'élément de commande (13) la priorité est attribuée à ce dernier par rapport à la commande de la fenêtre au moyen du lève-vitre (7) au moins du lève-vitre (7) à l'arrière.

9. Procédé selon l'une quelconque des revendications 1 à 8, **caractérisé en ce qu'**en complément de l'élément de blocage (12), s'affiche une image prise par une caméra d'habitacle (11) de la personne (15) qui se trouve de préférence à l'arrière, ladite personne se sert du lève-vitre (7) déclenchant l'affichage.

10. Véhicule à moteur comprenant une surface d'affichage (10) tactile et des lève-vitre (7, 9) électriques dans la zone avant et à l'arrière du véhicule, ainsi qu'une commande qui est conçue pour exécuter le procédé selon l'une quelconque des revendications 1 à 9.
